# EUROPEAN PATENT SPECIFICATION

(11) **EP 4 669 469 B1**
(45) Date of publication and mention of the grant of the patent: **09.12.2026**
(21) Application number: 24712697.2
(22) Date of filing: 21.02.2024
(51) Int. Cl.: B05B 12/12, B01F 27/50, B01F 27/60, B01J 2/00, B05B 13/02, G01F 13/00, A23N 17/00, A23P 20/18, G01F 23/292, B01J 2/10

(54) **CONVEYOR SPRAY SYSTEM WITH WEIGHT CONTROL**
FÖRDERSPRÜHVORRICHTUNG MIT GEWICHTSKONTROLLE
SYSTÈME DE PULVÉRISATION DANS UN CONVOYEUR AVEC CONTRÔLE DE LA MASSE

(30) Priority: 21.02.2023 US 202363447119 P
(43) Date of publication of application: 31.12.2025
(73) Proprietor: Spraying Systems Co., Wheaton, IL 60187-7901 (US)
(72) Inventor: WILCOX, Cullen G., Northwoods, Illinois 60185 (US); DEVOLL, Joshuah Shane, Gilberts, Illinois 60136 (US)
(74) Representative: Barker Brettell LLP
(86) International application number: PCT/US2024/016664
(87) International publication number: WO 2024/178074

(56) References cited:
- EP-A1- 1 170 060
- WO-A1-2009/004292
- WO-A1-2019/095047
- GB-A- 2 170 319
- GB-A- 2 373 988
- US-A- 6 007 859
- US-A1- 2014 086 684
- US-B2- 7 153 533

## Description

### BACKGROUND OF THE INVENTION

In many industries there is a need for applying an ingredient to a material at a rate that is a function of the unit weight of the material (i.e., the weight of the ingredient per the weight of the material to which the ingredient is to be applied.) In the production of dry pet food, by way of example, various ingredients or additives, such as antioxidants and flavorings, are added to the rendered animal meal at per unit weight rates. In the manufacturing of pet food, screw conveyors or tubular drag conveyors are used to move the rendered animal meal throughout the manufacturing plant. However, in order to apply such ingredients or additives, the animal meal must be diverted from the conveyor system, collected and weighed. Only then can the ingredient or additive be applied. However, such a system significantly slows the pet food production increasing costs and decreasing efficiency. Similar issues arise in other applications in which an ingredient is applied to a liquid at a rate based on the unit weight of a material.

One way in which to improve the efficiency is to apply the ingredients while the pet food is moving in the conveyor systems. However, while spray systems exist that have control systems that can precisely apply a liquid per unit weight, such systems cannot operate with precision in the context of a material moving in or on a conveyor system because of the lack of a method of accurately measuring the weight of the material while it is in transit.
EP 1 170 060 A1 discloses frozen food that is sprayed with a liquid or dry particles in a free-fall electrostatic jet spaying process. The spray is liquid sauce, emulsion or suspension devoid of solids and separately formed in a homogenizer. The atomized spray particle grain size is 0.1-0.7 mm. The quantities of solid food and suspended matter are determined by weighing and measuring instruments in a computer-controlled system.
US 7 153 533 B2 discloses a seasoning system that uniformly coats a food product with the desired amount of seasoning, with the seasoning rate preferably being controlled as a function of the product volume signals from the sensors. The seasoning system utilizes linear motion conveyors and either a rotating drum or a deflector and a second seasoning unit between linear conveyors. Oil may be sprayed onto food products and tumbled in a drum which both rotates and moves in a reciprocating manner with the conveyor tray.
WO 2019/095047 A1 discloses a granular coating conveyor system for coating granular particles carried in compartments along a tubular conveyor member. Coating fluid is fed over the granular particles through radial nozzles located inside a co-axial rotating blender with tubular member upstream discharge port and tubular member downstream return ingress port for the granular particles. The blender is a drum having a helicoidal spiral screw integrally mounted to an interior peripheral wall face of the drum and extending therealong radially outwardly of the tubular member.

### SUMMARY

According to a first aspect of the invention there is provided a spray system as defined by claim 1 and a spray system as defined by claim 9. Optional features are defined by the dependent claims._In view of the foregoing, an object of the invention is to provide a spray system capable of precisely applying a liquid to a material at a rate that is a function of the unit weight of the material as it is moving via a conveying system.

A related object to the invention is to provide a spray system having a control system that can accurately and precisely measure the weight of material as it is being conveyed.

A further object of the invention is to provide a spray system that is configured so as not to apply sprayed liquid within areas identified as not containing the material to be sprayed.

Yet another object of the present invention is to provide a spray system having a control system configured to apply liquid at a distance from the sensor to eliminate overspray on the sensor.

Another object of the present invention is to provide a spray system in which the flow of the liquid is monitored and adjusted to account for variables such as, for example, liquid temperature, nozzle inconsistency, and liquid viscosity.
Examples and embodiments of the description not falling within the scope of the claims do not form part of the invention and are provided for illustrative purposes only.

### BRIEF DESCRIPTION OF THE SEVERAL VIEWS OF THE DRAWINGS

FIG. 1 is a side perspective view of a portion of a screw conveyor with a spray system having a per unit weight control system according to the present disclosure.
FIG. 2 is a partially cut away side perspective view of the screw conveyor and spray system of FIG. 1.
FIG. 3 is an end view of the screw conveyor and spray system of FIG. 1 showing a material being conveyed.
FIG. 4 is a schematic side sectional view of the screw conveyor and spray system of FIG. 1 taken in the plane of line 4-4 of FIG. 3 and showing the material being conveyed and an embodiment of the control system of the present disclosure.

### DETAILED DESCRIPTION OF THE INVENTION

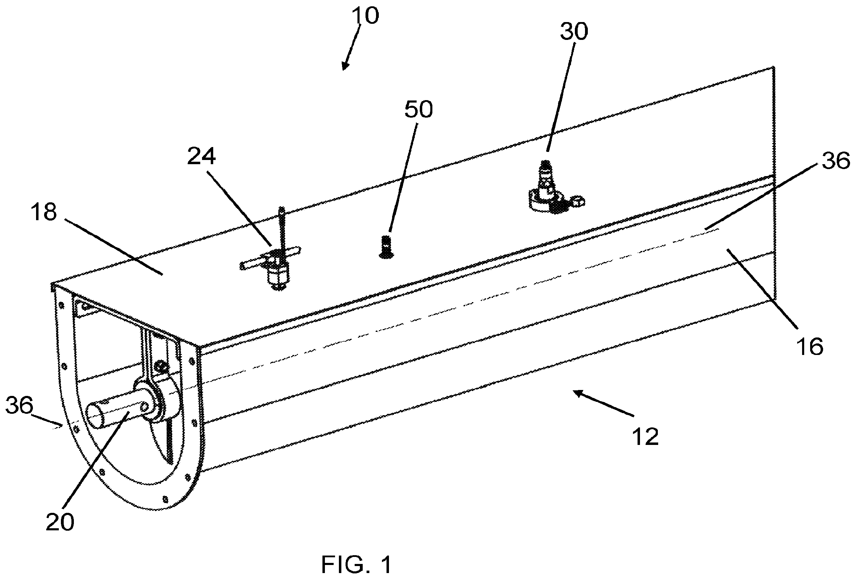

Referring now more particularly to FIGS. 1-4 of the drawings, there is shown an illustrative spray system 10 in accordance with the invention. The illustrative spray system 10 is arranged in connection with a screw conveyor 12 that is operable to transport a material 14 to which a liquid is applied. In particular, as described in greater detail below, the spray system 10 is configured to accurately apply the liquid to the material 14 being conveyed at a precise rate that is a function of a unit weight of the material 14. In one example, the material 14 to which the liquid is being applied may be a food item or pet food item and the liquid being applied may be an ingredient such as, for example, a flavoring. However, the present invention is not limited to the spraying of any particular type of liquid or to any particular spray target material. Rather, the spray system 10 of the present invention can be used with a wide variety of different spray target materials, including granulated, powdered or dry solids, and liquids. Moreover, while the spray system 10 of the invention is shown in connection with the screw conveyor 12, it should be understood that the spray system 10 is also applicable to other types of conveyor systems including tubular drag conveyors.

In the illustrated embodiment, the screw conveyor 12 includes a generally tubular shaped housing 16 that has a generally flat upper wall 18. Different conveyor housings may also be used depending, for example, on the material 14 being transported and/or other considerations relating to the particular application. In some embodiments, the conveyor housing 16 may have an open configuration. In the illustrated embodiment, the screw conveyor includes a longitudinally extending drive mechanism 20 including a shaft on which a plurality of screw blades 22 are supported. Other types of drive mechanisms or material moving structures could also be used.

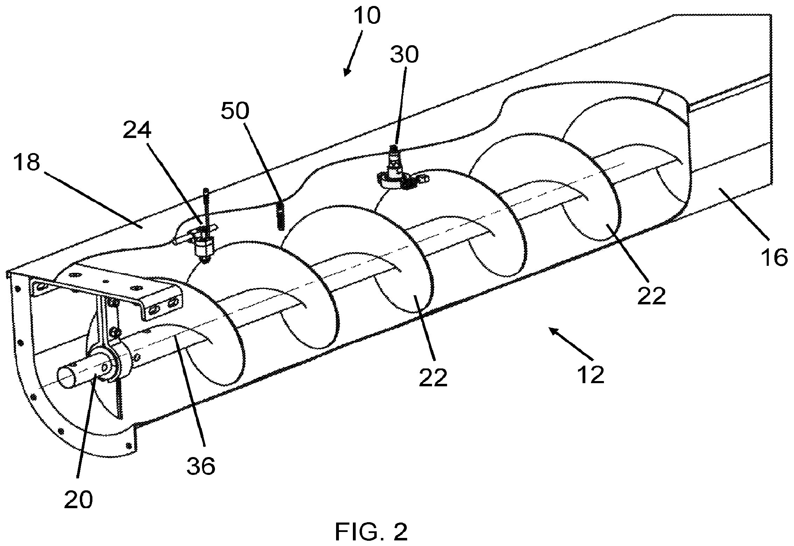

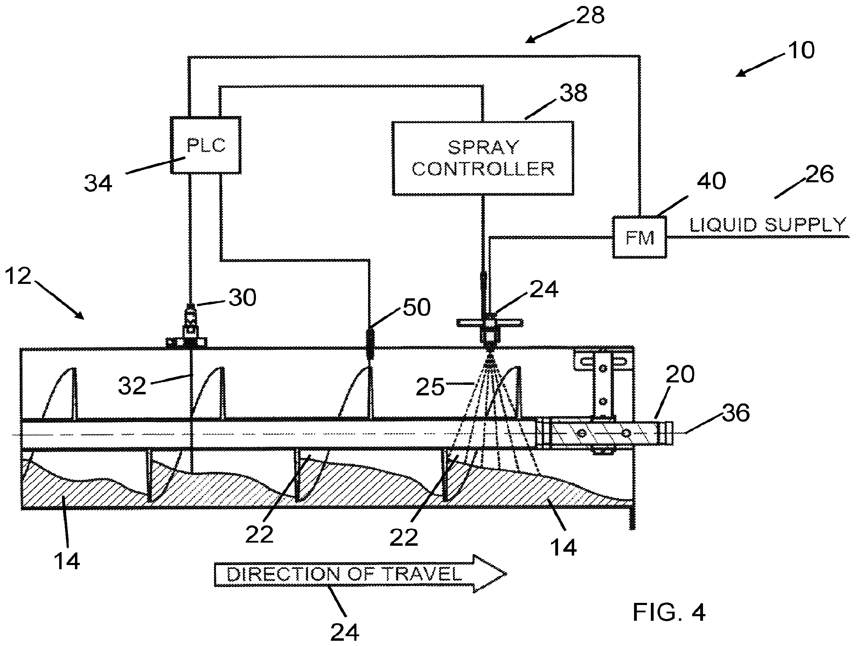

For dispensing the liquid onto the conveyed material 14, the spray system 10 includes one or more spray nozzles 24 as shown in FIGS. 1 and 2. In the illustrated embodiment, a single spray nozzle 24 is shown, however, any number of spray nozzles may be provided. According to one embodiment, multiple spray nozzles 24 may be arranged in longitudinally spaced relation from one another along the longitudinal length of the screw conveyor 12. Laterally spaced spray nozzles 24 may also be used. In this case, the spray nozzle 24 is supported on the upper wall 18 of the tubular housing 16 of the screw conveyor 12 and oriented so as to discharge liquid into the tubular housing 16 and downwards onto the material 14 being conveyed therein. The spray nozzle 24 may be connected to a liquid supply 26 via, for example, a fluid or liquid supply line as shown schematically in FIG. 4. The spray nozzle 24 is configured to discharge fluid or liquid upon actuation between closed (i.e., no spray discharge) and open positions (i.e., active spray discharge) and may be configured to provide any desired spray pattern, and as will be appreciated from the following, the present invention is not limited to any particular type of spray nozzle or spray pattern.

For directing operation of the spray nozzle 24 so as to apply liquid to the material 14 being conveyed at a precisely controlled rate that is based on the unit weight of the material 14, the spray system 10 has an associated weight measurement system 28 as shown in FIG. 4. Moreover, to measure the distance to the upper surface of the material 14 being conveyed, the weight measurement system 28 includes a first sensor in this case a distance sensor 30. In the illustrated embodiment, the distance sensor 30 is mounted to the upper wall 18 of the tubular housing 16 a distance upstream relative to the direction of travel 29 of the conveyed material 14 from the spray nozzle 24, although other distance sensor mounting arrangements may be used. The distance sensor 30 may be configured and oriented to accurately and precisely measure the distance from the sensor 30 to the surface of the material 14 being conveyed from which information a height and/or cross-sectional area of the material being conveyed may be determined.

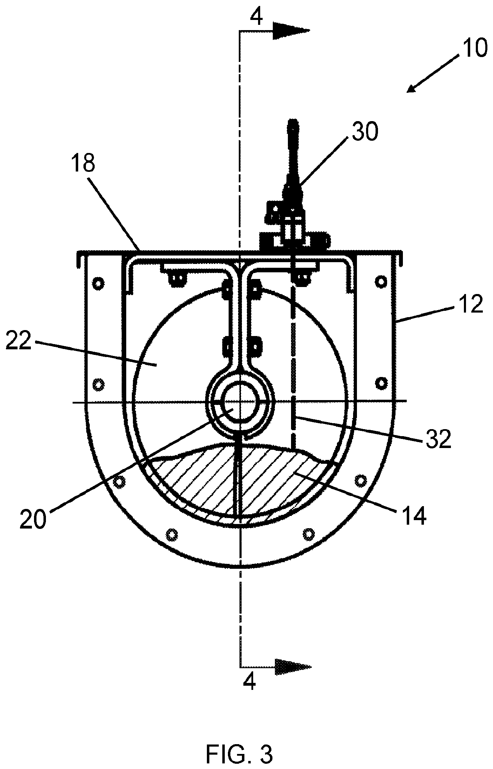

The distance sensor 30 may be arranged within the screw conveyor 12 to avoid known obstacles within the screw conveyor 12. For example, as shown in FIG. 3, the distance sensor 30 may be positioned offset from the longitudinal axis 36 of the drive mechanism 20 of the conveyor such that the distance sensor 30 has a direct line of sight 32 to the material 14 even if the upper surface of the material 14 is below the height of the drive mechanism 20.

For calculating the weight of the material 14 being conveyed, the weight measurement system 28 of the spray system 10 may further include a programmable logic controller 34 (PLC) that is in communication with the distance sensor 30 and a second sensor, for example a proximity sensor 50, as shown, for example, in FIG. 4. More particularly, the PLC 34 may be configured to use the known geometry of the trough of the conveyor system 12 and the known geometry of the known obstacles of the conveyor system 12 like the drive mechanism 20 and the screw blades 22 to calculate the cross-sectional area of the material 14. As shown in FIG. 4, the proximity sensor 50 may be in communication with the PLC 34 and mounted in close relation with the conveyor system's 12 screw blades 22 for the purpose of detecting the screw blades 22. By sensing subsequent screw blades 22 and applying the known pitch of the screw blade 22, the PLC 34, in turn, is able to calculate the material's distance traveled. Using the predetermined cross-sectional area of the material 14 and the distance the material has travelled, the PLC 34 is able to calculate the material's volume. Then, by applying the known density of the material 14 to the volume of the material 14, the PLC 34 may be configured to accurately calculate the instantaneous weight of the material 14 being conveyed beneath the distance sensor 30.

In other words, the proximity sensor 50 provides information on the timing of the screw conveyor 12 from pitch-to-pitch. The known dimensions of the pitch length, diameter, etc. of the screw blades 22 are stored, for example, in the PLC 34 for use in calculating volume. The distance sensor 30 is used to determine the height or level of the material 14 in the screw conveyor 12. Thus, the total volume of material 14 over the time recorded by the proximity sensor 50 provides a volume of material per unit time measurement. Using the bulk density of the material, the volume/unit time can be converted to a weight/unit time by the PLC 34 of the weight measurement system 28.

To direct actuation of the spray nozzle 24 between the open and closed positions so as to discharge fluid, the spray system 10 includes a spray controller 38 as shown in FIG. 4. The spray controller 38 may communicate with the spray nozzle 24 and the weight measurement system 28 including the distance sensor 30, the proximity sensor 50 and the PLC 34 and be configured to vary the duty cycle of the spray nozzle 24, opening and closing the spray nozzle 24 at a rate to provide a desired percentage of spray nozzle 24 open time. By controlling the percentage of time the spray nozzle 24 is in the respective open and closed positions, the spray controller 38 can effectively dispense the desired volume or amount of liquid to achieve the desired per unit weight application of liquid. The spray controller 38 may also be in communication with a flow meter 40 (see FIG. 4) that provides the control measurement needed to verify the ratio between the weight of the dispensed liquid 25 and the weight of the material 14. One example of a suitable spray controller 38 that can achieve the desired modulated frequency and variable duty cycle is the AutoJet Model 2150+ Spray Control Panel available from Spraying Systems Co., the assignee of the present application. The AutoJet Model 2150+ Spray Control Panel has settings which allow for precise application of liquid on a per unit weight basis. Correlating the modulated application rate of the dispensed liquid via the spray controller 38 with the instantaneous weight of the material calculated via the distance sensor 30 and PLC 34 provides an efficient method of maintaining a consistent product. While the illustrated embodiment includes a separate spray controller 38 and PLC 34, a single controller that incorporates both the functions of the spray controller 38 and the PLC 34 may be used.

An ultrasonic clamp may be provided on the flow meter 40 to monitor the actual flow rate of the system. This flow rate may be fed back into the PLC 34 and compared to the calculated flow rate that is required to hit the setpoint on the system. The spray controller 38 output to the nozzle 24 is then adjusted so that the theoretical flow rate and the actual flow rate are the same. This can help ensure that the liquid flow rate being applied to the material lines up with the calculations and data being received by the distance sensor 30.

To reduce or eliminate the possibility that overspray from the spray nozzle 24 hampers proper operation of the distance sensor 30, the distance sensor 30 may be arranged remotely from the spray nozzle 24 so that dispensed liquid from the spray nozzle 24 does not interfere with the line sight 32 (see FIG. 4) of the distance sensor 30. More particularly, the spray controller 38 may be equipped with a timing function that delays the corresponding actuation of the spray nozzle 24 for a given material weight measurement. The magnitude of the actuation delay is based on the distance in the direction of travel 29 of the material 14 between the distance sensor 30 and the spray nozzle 24 and the speed at which the material 14 is being moved by the conveyor system 12.

The distance sensor 30, proximity sensor 50, PLC 34 and spray controller 38 may also be configured to control the spray nozzle 24 so that liquid is not dispensed into areas of the conveyor system 12 that do not contain the material 14 to be sprayed. In keeping with the invention, the actuation rate between the open and closed positions of the spray nozzle 24 will result in a zero percent duty cycle when no material is detected.

The use of the terms "a" and "an" and "the" and "at least one" and similar referents in the context of describing the invention (especially in the context of the following claims) are to be construed to cover both the singular and the plural, unless otherwise indicated herein or clearly contradicted by context. The use of the term "at least one" followed by a list of one or more items (for example, "at least one of A and B") is to be construed to mean one item selected from the listed items (A or B) or any combination of two or more of the listed items (A and B), unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications of the subject matter recited in the claims appended hereto as long as the embodiments resulting from these modifications fall within the scope of the appended claims. Moreover, any combination of the above-described elements in all possible variations thereof is encompassed by the invention as long as the combination is encompassed by the scope of the appended claims.

## Claims

1. A spray system (10) for applying an amount of a liquid to a material (14) that is a function of the unit weight of the material as the material (14) is moving via a conveyor system (12), the spray system (10) comprising:
a spray nozzle (24) oriented to discharge liquid on the material being conveyed, the spray nozzle (24) configured to discharge the liquid upon actuation between a closed position and an open position;
**characterized by**:
a weight measurement system (28) comprising:
a first sensor (30) for obtaining information indicative of a cross-sectional area of the material (14) being conveyed;
a second sensor (50) for obtaining information indicative of a rate at which the material (14) is being conveyed;
a programmable logic controller (PLC) (34) in communication with the first sensor (30) and second sensor (50) and configured to determine a total volume of material conveyed per a unit of time and determine a weight of the material being conveyed per the unit of time using a bulk density of the material (14) being conveyed;
a spray controller (38) in communication with the spray nozzle (24) and the weight measurement system (28), the spray controller (38) configured to vary a cycle of actuation of the spray nozzle (24) between the closed and open positions to discharge a desired amount of the liquid based on the weight per unit time of the material being conveyed as determined by the weight measurement system (28).

2. The spray system (10) of claim 1, wherein the conveyor (12) is a screw conveyor and the second sensor (50) comprises a proximity sensor and wherein the information indicative of the rate at which the material is being conveyed is a pitch-to-pitch timing of the screw conveyor.

3. The spray system (10) of claim 1, wherein the PLC (34) stores information relating to a geometry of the conveyor system (12).

4. The spray system (10) of claim 1, wherein the first sensor (30) is arranged with a direct line of sight to the material (14) being conveyed.

5. The spray system (10) of claim 1, further including a flow meter (40) arranged to measure an amount of liquid supplied to the spray nozzle (24).

6. The spray system (10) of claim 1, wherein the first sensor (30) is spaced a distance from the spray nozzle (24) along a direction of travel of the material (14) being conveyed.

7. The spray system (10) of claim 6, wherein the spray controller (38) includes a timing function that is configured to delay the corresponding actuation of the spray nozzle (24) for a given weight measurement based on the distance between the spray nozzle (24) and the first sensor (30) and the rate at which the material (14) is being conveyed.

8. The spray system (10) of claim 1, wherein the PLC (34) is configured to determine when no material to be sprayed is being conveyed past the spray nozzle (24) and the spray controller (38) is configured to move the spray nozzle (24) to the closed position when the PLC (34) determines that no material to be sprayed is being conveyed past the spray nozzle (24).

9. A spray system (10) for applying an amount of a liquid to a material (14) that is a function of the unit weight of the material, the spray system (10) comprising:
a screw conveyor (12) for conveying the material (14),
a spray nozzle (24) oriented to discharge liquid on the material (14) being conveyed on the screw conveyor (12), the spray nozzle (24) configured to discharge the liquid upon actuation between a closed position and an open position;
**characterized by**:
a weight measurement system (28) comprising:
a first sensor (30) for obtaining information indicative of a cross-sectional area of the material being conveyed;
a second sensor (50) for obtaining information indicative of a pitch-to-pitch timing of the screw conveyor (12);
a programmable logic controller (PLC) (34) in communication with the first sensor (30) and second sensor (50), the PLC (34) storing information relating to a geometry of the conveyor system (12), the PLC (34) being configured to determine a total volume of material conveyed per a unit of time and determine a weight of the material being conveyed per the unit of time using a bulk density of the material (14) being conveyed;
a spray controller (38) in communication with the spray nozzle (24) and the weight measurement system (28), the spray controller (38) configured to vary a cycle of actuation of the spray nozzle (24) between the closed and open positions to discharge a desired amount of the liquid based on the weight per unit time of the material (14) being conveyed as determined by the weight measurement system (28).

10. The spray system (10) of claim 2 or the spray system (10) of claim 9, wherein the PLC (34) stores information relating to a pitch of the screw blade (22).

11. The spray system (10) of claim 3 or the spray system (10) of claim 9, wherein the first sensor (30) is a distance sensor that measures a height of the material (14) being conveyed and the PLC (34) uses the information from the first sensor (30) relating to the height of the material (14) being conveyed and the information relating to the geometry of the conveyor (12) to calculate a cross-sectional area of the material being conveyed which is used to calculate the total volume of material conveyed per the unit of time.

12. The spray system (10) of claim 9, wherein the first sensor (30) is arranged offset from a longitudinal axis of a drive mechanism (20) of the screw conveyor (12).

13. The spray system (10) of claim 9, wherein the first sensor (30) is spaced a distance upstream of the spray nozzle (24) along a direction of travel of the material (14) being conveyed.

14. The spray system (10) of claim 13, wherein the spray controller (38) includes a timing function that is configured to delay the corresponding actuation of the spray nozzle (24) for a given weight measurement based on the distance between the spray nozzle (24) and the first sensor (30) and the rate at which the material (14) is being conveyed.

15. The spray system (10) of claim 9, wherein the PLC (34) is configured to determine when no material to be sprayed is being conveyed past the spray nozzle (24) and the spray controller (38) is configured to move the spray nozzle (24) to the closed position when the PLC (34) determines that no material to be sprayed is being conveyed past the spray nozzle (24).

## Patentansprüche

1. Sprühsystem (10) zum Aufbringen einer Menge einer Flüssigkeit auf ein Material (14), die von dem Einheitsgewicht des Materials abhängt, während sich das Material (14) über ein Fördersystem (12) bewegt, wobei das Sprühsystem (10) Folgendes umfasst:
eine Sprühdüse (24), die dazu ausgerichtet ist, Flüssigkeit auf dem Material, das gefördert wird, abzugeben, wobei die Sprühdüse (24) dazu konfiguriert ist, die Flüssigkeit bei Betätigung zwischen einer geschlossenen Position und einer offenen Position abzugeben;
**gekennzeichnet durch**:
ein Gewichtsmesssystem (28), umfassend:
einen ersten Sensor (30) zum Erlangen von Informationen, die einen Querschnittsbereich des Materials (14), das gefördert wird, angeben;
einen zweiten Sensor (50) zum Erlangen von Informationen, die eine Rate, mit der das Material (14) gefördert wird, angeben;
eine speicherprogrammierbare Steuerung (PLC) (34), die mit dem ersten Sensor (30) und dem zweiten Sensor (50) in Kommunikation steht und dazu konfiguriert ist, ein Gesamtvolumen an gefördertem Material pro eine Zeiteinheit zu bestimmen und ein Gewicht des Materials, das pro die Zeiteinheit gefördert wird, unter Verwendung einer Schüttdichte des Materials (14), das gefördert wird, zu bestimmen;
eine Sprühsteuerung (38), die mit der Sprühdüse (24) und dem Gewichtsmesssystem (28) in Kommunikation steht, wobei die Sprühsteuerung (38) dazu konfiguriert ist, einen Betätigungszyklus der Sprühdüse (24) zwischen der geschlossenen und der offenen Position zu variieren, um eine erwünschte Menge der Flüssigkeit basierend auf dem Gewicht pro Zeiteinheit des Materials, das gefördert wird, wie durch das Gewichtsmesssystem (28) bestimmt, abzugeben.

2. Sprühsystem (10) nach Anspruch 1, wobei der Förderer (12) ein Schneckenförderer ist und der zweite Sensor (50) einen Näherungssensor umfasst und wobei die Informationen, welche die Rate angeben, mit welcher das Material gefördert wird, eine Steigung-zu-Nick-Zeitplanung des Schneckenförderers sind.

3. Sprühsystem (10) nach Anspruch 1, wobei die PLC (34) Informationen in Bezug auf eine Geometrie des Fördersystems (12) speichert.

4. Sprühsystem (10) nach Anspruch 1, wobei der erste Sensor (30) mit einer direkten Sichtlinie zu dem Material (14), das gefördert wird, angeordnet ist.

5. Sprühsystem (10) nach Anspruch 1, ferner beinhaltend einen Durchflussmesser (40), der dazu angeordnet ist, eine Menge an Flüssigkeit zu messen, die der Sprühdüse (24) zugeführt wird.

6. Sprühsystem (10) nach Anspruch 1, wobei der erste Sensor (30) um einen Abstand von der Sprühdüse (24) entlang einer Bewegungsrichtung des Materials (14), das gefördert wird, beabstandet ist.

7. Sprühsystem (10) nach Anspruch 6, wobei die Sprühsteuerung (38) eine Zeitplanungsfunktion beinhaltet, die dazu konfiguriert ist, die entsprechende Betätigung der Sprühdüse (24) für eine gegebene Gewichtsmessung basierend auf dem Abstand zwischen der Sprühdüse (24) und dem ersten Sensor (30) und der Rate, mit der das Material (14) gefördert wird, zu verzögern.

8. Sprühsystem (10) nach Anspruch 1, wobei die PLC (34) dazu konfiguriert ist, zu bestimmen, wann kein zu sprühendes Material an der Sprühdüse (24) vorbei gefördert wird, und die Sprühsteuerung (38) dazu konfiguriert ist, die Sprühdüse (24) in die geschlossene Position zu bewegen, wenn die PLC (34) bestimmt, dass kein zu sprühendes Material an der Sprühdüse (24) vorbei gefördert wird.

9. Sprühsystem (10) zum Aufbringen einer Menge einer Flüssigkeit auf ein Material (14), die von dem Einheitsgewicht des Materials abhängig ist, wobei das Sprühsystem (10) Folgendes umfasst:
einen Schneckenförderer (12) zum Fördern des Materials (14),
eine Sprühdüse (24), die dazu ausgerichtet ist, Flüssigkeit auf das Material (14), das auf dem Schneckenförderer (12) gefördert wird, abzugeben, wobei die Sprühdüse (24) dazu konfiguriert ist, die Flüssigkeit bei Betätigung zwischen einer geschlossenen Position und einer offenen Position abzugeben;
**gekennzeichnet durch**:
ein Gewichtsmesssystem (28), umfassend:
einen ersten Sensor (30) zum Erlangen von Informationen, die einen Querschnittsbereich des Materials, das gefördert wird, angeben;
einen zweiten Sensor (50) zum Erlangen von Informationen, die eine Steigung-zu-Nick-Zeitplanung des Schneckenförderers (12) angeben;
eine speicherprogrammierbare Steuerung (PLC) (34), die mit dem ersten Sensor (30) und dem zweiten Sensor (50) in Kommunikation steht, wobei die PLC (34) Informationen in Bezug auf eine Geometrie des Fördersystems (12) speichert, wobei die PLC (34) dazu konfiguriert ist, ein Gesamtvolumen an gefördertem Material pro eine Zeiteinheit zu bestimmen und ein Gewicht des Materials, das pro die Zeiteinheit gefördert wird, unter Verwendung einer Schüttdichte des Materials (14), das gefördert wird, zu bestimmen;
eine Sprühsteuerung (38), die mit der Sprühdüse (24) und dem Gewichtsmesssystem (28) in Kommunikation steht, wobei die Sprühsteuerung (38) dazu konfiguriert ist, einen Betätigungszyklus der Sprühdüse (24) zwischen der geschlossenen und der offenen Position zu variieren, um eine erwünschte Menge der Flüssigkeit basierend auf dem Gewicht pro Zeiteinheit des Materials (14), das gefördert wird, wie durch das Gewichtsmesssystem (28) bestimmt, abzugeben.

10. Sprühsystem (10) nach Anspruch 2 oder Sprühsystem (10) nach Anspruch 9, wobei die PLC (34) Informationen in Bezug auf eine Steigung der Schraubschaufel (22) speichert.

11. Sprühsystem (10) nach Anspruch 3 oder Sprühsystem (10) nach Anspruch 9, wobei der erste Sensor (30) ein Abstandssensor ist, der eine Höhe des Materials (14), das gefördert wird, misst und die PLC (34) die Informationen von dem ersten Sensor (30) in Bezug auf die Höhe des Materials (14), das gefördert wird, und die Informationen in Bezug auf die Geometrie des Förderers (12) dazu verwendet, einen Querschnittsbereich des Materials, das gefördert wird, zu berechnen, der dazu verwendet wird, das Gesamtvolumen an Material, das gefördert wird, pro die Zeiteinheit zu berechnen.

12. Sprühsystem (10) nach Anspruch 9, wobei der erste Sensor (30) versetzt von einer Längsachse eines Antriebsmechanismus (20) des Schneckenförderers (12) angeordnet ist.

13. Sprühsystem (10) nach Anspruch 9, wobei der erste Sensor (30) um einen Abstand stromaufwärts der Sprühdüse (24) entlang einer Bewegungsrichtung des Materials (14), das gefördert wird, beabstandet ist.

14. Sprühsystem (10) nach Anspruch 13, wobei die Sprühsteuerung (38) eine Zeitplanungsfunktion beinhaltet, die dazu konfiguriert ist, die entsprechende Betätigung der Sprühdüse (24) für eine gegebene Gewichtsmessung basierend auf dem Abstand zwischen der Sprühdüse (24) und dem ersten Sensor (30) und der Rate, mit der das Material (14) gefördert wird, zu verzögern.

15. Sprühsystem (10) nach Anspruch 9, wobei die PLC (34) dazu konfiguriert ist, zu bestimmen, wann kein zu sprühendes Material an der Sprühdüse (24) vorbei gefördert wird, und die Sprühsteuerung (38) dazu konfiguriert ist, die Sprühdüse (24) in die geschlossene Position zu bewegen, wenn die PLC (34) bestimmt, dass kein zu sprühendes Material an der Sprühdüse (24) vorbei gefördert wird.

## Revendications

1. Système de pulvérisation (10) pour l'application d'une quantité d'un liquide sur un matériau (14) qui est une fonction du poids unitaire du matériau à mesure que le matériau (14) se déplace par l'intermédiaire d'un système de transporteur (12), le système de pulvérisation (10) comprenant :
une buse de pulvérisation (24) orientée pour l'évacuation de liquide sur le matériau qui est transporté, la buse de pulvérisation (24) configurée pour l'évacuation du liquide lors d'un actionnement entre une position fermée et une position ouverte ;
**caractérisé par** :
un système de mesure de poids (28) comprenant :
un premier capteur (30) pour l'obtention d'informations indicatives d'une zone en coupe transversale du matériau (14) qui est transporté ;
un second capteur (50) pour l'obtention d'informations indicatives d'une vitesse à laquelle le matériau (14) est transporté ;
un contrôleur logique programmable (PLC) (34) en communication avec le premier capteur (30) et le second capteur (50) et configuré pour la détermination d'un volume total de matériau transporté par unité de temps et la détermination d'un poids du matériau qui est transporté par unité de temps en utilisant une densité apparente du matériau (14) qui est transporté ;
un dispositif de commande de pulvérisation (38) en communication avec la buse de pulvérisation (24) et le système de mesure de poids (28), le dispositif de commande de pulvérisation (38) configuré pour la variation d'un cycle d'actionnement de la buse de pulvérisation (24) entre les positions fermée et ouverte pour l'évacuation d'une quantité souhaitée du liquide sur la base du poids par unité de temps du matériau qui est transporté tel que déterminé par le système de mesure de poids (28).

2. Système de pulvérisation (10) selon la revendication 1, dans lequel le transporteur (12) est un transporteur à vis et le second capteur (50) comprend un capteur de proximité et dans lequel les informations indicatives de la vitesse à laquelle le matériau est transporté sont une synchronisation pas à pas du transporteur à vis.

3. Système de pulvérisation (10) selon la revendication 1, dans lequel le PLC (34) stocke des informations relatives à une géométrie du système de transporteur (12).

4. Système de pulvérisation (10) selon la revendication 1, dans lequel le premier capteur (30) est agencé avec une ligne de visée directe vers le matériau (14) qui est transporté.

5. Système de pulvérisation (10) selon la revendication 1, incluant en outre un débitmètre (40) agencé pour la mesure d'une quantité de liquide fournie à la buse de pulvérisation (24).

6. Système de pulvérisation (10) selon la revendication 1, dans lequel le premier capteur (30) est espacé d'une distance de la buse de pulvérisation (24) le long d'une direction de déplacement du matériau (14) qui est transporté.

7. Système de pulvérisation (10) selon la revendication 6, dans lequel le dispositif de commande de pulvérisation (38) inclut une fonction de synchronisation qui est configurée pour le retardement de l'actionnement correspondant de la buse de pulvérisation (24) pour une mesure de poids donnée sur la base de la distance entre la buse de pulvérisation (24) et le premier capteur (30) et de la vitesse à laquelle le matériau (14) est transporté.

8. Système de pulvérisation (10) selon la revendication 1, dans lequel le PLC (34) est configuré pour la détermination du moment où aucun matériau devant être pulvérisé n'est transporté au-delà de la buse de pulvérisation (24) et le dispositif de commande de pulvérisation (38) est configuré pour le déplacement de la buse de pulvérisation (24) vers la position fermée lorsque le PLC (34) détermine qu'aucun matériau devant être pulvérisé n'est transporté au-delà de la buse de pulvérisation (24).

9. Système de pulvérisation (10) pour l'application d'une quantité d'un liquide sur un matériau (14) qui est une fonction du poids unitaire du matériau, le système de pulvérisation (10) comprenant :
un transporteur à vis (12) pour le transport du matériau (14),
une buse de pulvérisation (24) orientée pour l'évacuation de liquide sur le matériau (14) qui est transporté sur le transporteur à vis (12), la buse de pulvérisation (24) configurée pour l'évacuation du liquide lors d'un actionnement entre une position fermée et une position ouverte ;
**caractérisé par** :
un système de mesure de poids (28) comprenant :
un premier capteur (30) pour l'obtention d'informations indicatives d'une zone en coupe transversale du matériau qui est transporté ;
un second capteur (50) pour l'obtention d'informations indicatives d'une synchronisation pas à pas du transporteur à vis (12) ;
un contrôleur logique programmable (PLC) (34) en communication avec le premier capteur (30) et le second capteur (50), le PLC (34) stockant des informations relatives à une géométrie du système de transporteur (12), le PLC (34) étant configuré pour la détermination d'un volume total de matériau transporté par unité de temps et la détermination d'un poids du matériau qui est transporté par unité de temps en utilisant une densité apparente du matériau (14) qui est transporté ;
un dispositif de commande de pulvérisation (38) en communication avec la buse de pulvérisation (24) et le système de mesure de poids (28), le dispositif de commande de pulvérisation (38) configuré pour la variation d'un cycle d'actionnement de la buse de pulvérisation (24) entre les positions fermée et ouverte pour l'évacuation d'une quantité souhaitée du liquide sur la base du poids par unité de temps du matériau (14) qui est transporté tel que déterminé par le système de mesure de poids (28).

10. Système de pulvérisation (10) selon la revendication 2 ou système de pulvérisation (10) selon la revendication 9, dans lequel le PLC (34) stocke des informations relatives à un pas de la pale de vis (22).

11. Système de pulvérisation (10) selon la revendication 3 ou système de pulvérisation (10) selon la revendication 9, dans lequel le premier capteur (30) est un capteur de distance qui mesure une hauteur du matériau (14) qui est transporté et le PLC (34) utilise les informations en provenance du premier capteur (30) relatives à la hauteur du matériau (14) qui est transporté et les informations relatives à la géométrie du transporteur (12) pour le calcul d'une zone en coupe transversale du matériau qui est transporté qui est utilisée pour le calcul du volume total de matériau transporté par unité de temps.

12. Système de pulvérisation (10) selon la revendication 9, dans lequel le premier capteur (30) est agencé de manière décalée par rapport à un axe longitudinal d'un mécanisme d'entraînement (20) du transporteur à vis (12).

13. Système de pulvérisation (10) selon la revendication 9, dans lequel le premier capteur (30) est espacé d'une distance en amont de la buse de pulvérisation (24) le long d'une direction de déplacement du matériau (14) qui est transporté.

14. Système de pulvérisation (10) selon la revendication 13, dans lequel le dispositif de commande de pulvérisation (38) inclut une fonction de synchronisation qui est configurée pour le retardement de l'actionnement correspondant de la buse de pulvérisation (24) pour une mesure de poids donnée sur la base de la distance entre la buse de pulvérisation (24) et le premier capteur (30) et de la vitesse à laquelle le matériau (14) est transporté.

15. Système de pulvérisation (10) selon la revendication 9, dans lequel le PLC (34) est configuré pour la détermination du moment où aucun matériau devant être pulvérisé n'est transporté au-delà de la buse de pulvérisation (24) et le dispositif de commande de pulvérisation (38) est configuré pour le déplacement de la buse de pulvérisation (24) vers la position fermée lorsque le PLC (34) détermine qu'aucun matériau devant être pulvérisé n'est transporté au-delà de la buse de pulvérisation (24).
